# EUROPEAN PATENT SPECIFICATION

(11) **EP 4 415 011 B1**
(45) Date of publication and mention of the grant of the patent: **18.11.2026**
(21) Application number: 23217102.5
(22) Date of filing: 15.12.2023
(51) Int. Cl.: H01G 4/12, H01G 4/228, H01G 4/30

(54) **MULTILAYERED CAPACITOR AND MANUFACTURING METHOD THEREOF**
MEHRSCHICHTIGER KONDENSATOR UND HERSTELLUNGSVERFAHREN DAFÜR
CONDENSATEUR MULTICOUCHE ET SON PROCÉDÉ DE FABRICATION

(30) Priority: 13.02.2023 KR 20230018695
(43) Date of publication of application: 14.08.2024
(73) Proprietor: Samsung Electro-Mechanics Co., Ltd., Suwon-si, Gyeonggi-do 16674 (KR)
(72) Inventor: Yun, Kimyoung, Suwon-si, Gyeonggi-do 16674 (KR); Cho, Joon Yeob, Suwon-si, Gyeonggi-do 16674 (KR); Shin, Ahyoung, Suwon-si, Gyeonggi-do 16674 (KR); Choi, Myunghwa, Suwon-si, Gyeonggi-do 16674 (KR); Yang, Hyeonju, Suwon-si, Gyeonggi-do 16674 (KR)
(74) Representative: Grünecker Patent- und Rechtsanwälte PartG mbB

(56) References cited:
- US-A- 5 672 378
- US-A1- 2014 185 183
- US-A1- 2015 049 413
- US-A1- 2015 055 273
- US-A1- 2015 279 565
- US-A1- 2016 005 543
- US-A1- 2019 279 816
- US-A1- 2022 139 616

## Description

### TECHNICAL FIELD

This disclosure relates to a multilayered capacitor and a manufacturing method thereof.

### BACKGROUND

Since IT devices have achieved higher performance, a multilayered capacitor (MLCC) of high capacity is also required.

This high capacity may be achieved by increasing a volume fraction of an active region constituting the multilayered capacitor but decreasing that of the other cover or margin region not contributing to capacity of the multilayered capacitor.

However, when the margin ratio is reduced, moisture resistance reliability and mechanical strength may be deteriorated.
US 2015/055273 A1 relates to a laminate-type ceramic electric component such as laminated ceramic capacitor which has excellent mechanical strength and also has thermal shock resistance at the same time. A laminate-type ceramic electronic component comprises an inner layer part, in which dielectric layers comprising ABO (which represents a perovskite crystal in which A contains at least Ba and B contains at least Ti) as a main component and internal electrode layers are alternately laminated; and a pair of outer layer parts which sandwich the inner layer part, wherein the outer layer parts comprise a continuous film containing a Ba-Si-Ti-O based crystal phase.
US 5,672,378 A relates to a ceramic powder mixture is made by combining from 96 to 98 mole percent of precursors of a stoichiometric barium zirconate titanate (BZT) wherein zirconium amounts to from 13.5 to 15.0 mole percent, and adding from 0.5 to 1.5 mole percent niobium or lanthanum, from 1.2 to 2.6 weight percent of a cadmium silicate sintering flux, essentially no lead, and from zero to 2 mole % of an alkaline earth metal to obtain in the powder mixture a ratio (A/B) of the large cations (A) to the Small cations (B) in the range from 1.024 to 1.035. The mixture is calcined to obtain a powder comprised of agglomerates of essentially identical composition within the ranges given above. This powder of agglomerates may then be formed into a compact body that is sintered and fired to maturity at 1100° C. to produce a mature dielectric ceramic body meeting the Y5V standard and having a dielectric constant greater than 10,000 at the Curie temperature.

### SUMMARY

it is the object of the present invention to improve prior systems. This object is solved by the subject matter of the independent claims. Preferred embodiments are defined by the dependent claims.

One aspect of the present disclosure provides a multilayered capacitor in which a high capacity may be ensured by increasing a volume fraction of an active region and decreasing a volume fraction of a capacity non-contributing region, while a dense thin film is disposed on the surface of the capacitor body to inhibit the formation of penetration paths for moisture, water vapor, and hydrogen, thereby improving moisture resistance reliability and preventing mechanical strength degradation.

The multilayered capacitor according to the invention is defined by the features of claim 1 or claim 9. The method of manufacturing a multilayered capacitor according to the invention is defined by the features of claim 13.

A multilayered capacitor according to one aspect includes a capacitor body including a dielectric layer and an internal electrode, an external electrode disposed on the capacitor body, and a thin film disposed on a surface of the capacitor body and including barium zirconium titanate.

The barium zirconium titanate includes zirconium in an amount of about 10 parts by mole to about 50 parts by mole based on about 100 parts by mole of titanium.

The barium zirconium titanate may include zirconium in an amount of about 20 parts by mole to about 40 parts by mole based on about 100 parts by mole of titanium.

An average thickness of the thin film may be about 0.1 µm to about 3 µm.

The capacitor body may include a cover portion disposed on the dielectric layer and the internal electrode in a stacking direction.

The thin film may be disposed on the cover portion.

The capacitor body may have a first side and a second side perpendicular to a stacking direction of the dielectric layer and the internal electrode.

The external electrode may be disposed on the first side.

The capacitor body may further include a margin portion disposed on the second side.

The thin film may be disposed on the margin portion.

The multilayered capacitor further is includes an oxide layer between the capacitor body and the thin film.

The oxide layer includes barium zirconium titanate.

z₂ may be greater than z₁, in which z₁ is mol% of oxygen relative to the total barium zirconium titanate in the thin film and z₂ is mol% of oxygen relative to the total barium zirconium titanate in the oxide layer.

y₁:y₂ = about 100:70 to about 100:97, in which y₁ is mol% of zirconium relative to the total barium zirconium titanate in the thin film and y₂ is mol% of zirconium relative to the total barium zirconium titanate in the oxide layer.

In addition, z₁:z₂ = about 100:103 to about 100:140.

An average thickness of the oxide layer may be less than or equal to about 5 µm.

A multilayered capacitor according to another aspect includes a capacitor body including a dielectric layer and an internal electrode, an external electrode disposed on the capacitor body, a thin film disposed on the capacitor body, and an oxide layer disposed between the capacitor body and the thin film.

The thin film and oxide layer include barium zirconium titanate.

z₂ may be greater than z₁, in which z₁ is mol% of oxygen relative to the total barium zirconium titanate in the thin film and z₂ is mol% of oxygen relative to the total barium zirconium titanate in the oxide layer.

y₁:y₂ = about 100:70 to about 100:97, in which y₁ is mol% of zirconium relative to the total barium zirconium titanate in the thin film and y₂ is mol% of zirconium relative to the total barium zirconium titanate in the oxide layer.

In addition, z₁:z₂ = about 100:103 to about 100:140.

The barium zirconium titanate of the thin film may include zirconium in an amount of 20 parts by mole to 40 parts by mole based on about 100 parts by mole of titanium.

An average thickness of the thin film may be about 0.1 µm to about 3 µm.

An average thickness of the oxide layer may be less than or equal to about 5 µm.

The capacitor body may include a cover portion disposed on the dielectric layer and the internal electrode in the stacking direction.

The oxide layer may be disposed on the cover portion.

The capacitor body may have a first side and a second side perpendicular to a stacking direction of the dielectric layer and the internal electrode.

The external electrode may be disposed on the first side.

The capacitor body may further include a margin portion disposed on the second side.

The oxide layer may be disposed on the surface of the margin portion.

A method of manufacturing a multilayered capacitor according to another aspect includes preparing a dielectric green sheet and forming a conductive paste layer on a surface of the dielectric green sheet; stacking the dielectric green sheet with the conductive paste layer to form a dielectric green sheet stack; coating a composition for forming a thin film on the dielectric green sheet stack; firing the dielectric green sheet stack to form a capacitor body; and forming an external electrode on the capacitor body.

The composition for forming the thin film includes zirconium oxide.

The thin film is formed to include barium zirconium titanate, and the barium zirconium titanate includes zirconium in an amount of about 10 parts by mole to about 50 parts by mole based on about 100 parts by mole of titanium.

In the multilayered capacitor according to one aspect, high capacity may be ensured by increasing a volume fraction of an active region and decreasing a volume fraction of a capacity non-contributing region, while a dense thin film is disposed on the surface of the capacitor body to inhibit the formation of penetration paths for moisture, water vapor, and hydrogen, thereby improving moisture resistance reliability and preventing mechanical strength degradation.

### BRIEF DESCRIPTION OF THE DRAWINGS

FIG. 1 is a perspective view illustrating a multilayered capacitor
FIG. 2 is a cross-sectional view of the multilayered capacitor taken along line I-I' of FIG. 1.
FIG. 3 is a cross-sectional view of the multilayered capacitor taken along line II-II' of FIG. 1.
FIG. 4 is an exploded perspective view illustrating a stacked structure of internal electrodes in the capacitor body of FIG. 1.
FIG. 5 is a cross-sectional view of a multilayered capacitor according to an exemplary variation of one aspect.
FIG. 6 is a cross-sectional view of a multilayered capacitor according to an exemplary variation of one aspect.
FIG. 7 is a scanning electron micrograph of a cross-sectional sample of the multilayered capacitor manufactured in Example 1.

### DETAILED DESCRIPTION OF THE EMBODIMENTS

The present disclosure will be described more fully hereinafter with reference to the accompanying drawings, in which aspects of the disclosure are shown. The drawings and description are to be regarded as illustrative in nature and not restrictive. Like reference numerals designate like elements throughout the specification. Further, the accompanying drawings are provided only in order to allow aspects disclosed in the present specification to be easily understood,
and it is to be understood that the present disclosure includes all modifications, equivalents, and substitutions without departing from the scope of the present disclosure.

Terms including ordinal numbers such as first, second, and the like will be used only to describe various constituent elements, and are not to be interpreted as limiting these constituent elements. The terms are only used to differentiate one constituent element from other constituent elements.

It is to be understood that when one constituent element is referred to as being "connected" or "coupled" to another constituent element, it may be connected or coupled directly to the other constituent element or may be connected or coupled to the other constituent element with a further constituent element intervening therebetween. In contrast, it should be understood that, when it is described that an element is "directly coupled" or "directly connected" to another element, no element is present between the element and the other element.

Throughout the specification, it should be understood that the term "include," "comprise," "have," or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance. Unless explicitly described to the contrary, the word "comprise" and variations such as "comprises" or "comprising" will be understood to imply the inclusion of stated elements but not the exclusion of any other elements.

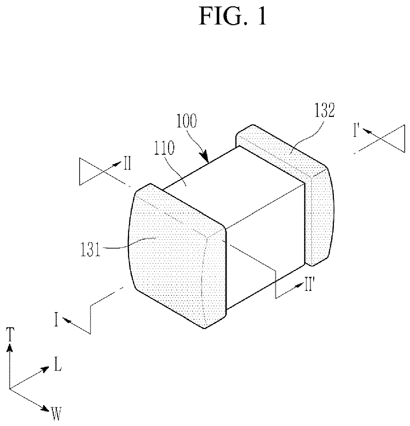

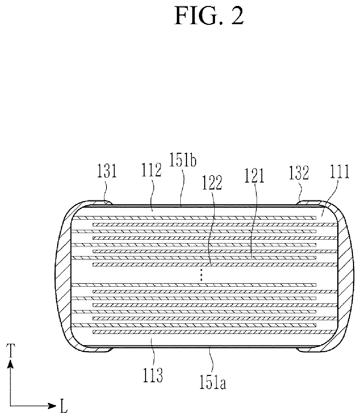

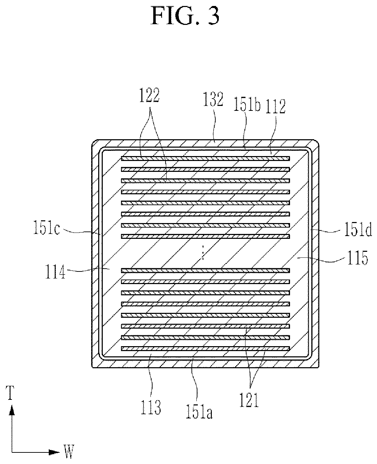

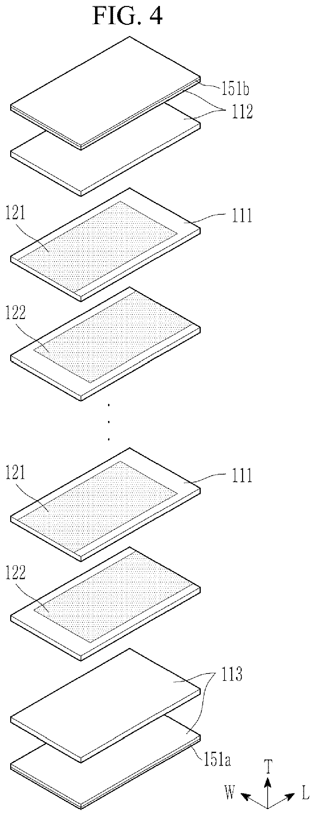

FIG. 1 is a perspective view illustrating a multilayered capacitor 100 not including all the features of the independent claims, FIG. 2 is a cross-sectional view of the multilayered capacitor 100 taken along line I-I' of FIG. 1, FIG. 3 is a cross-sectional view of the multilayered capacitor 100 taken along line II-II' of FIG. 1, and FIG. 4 is an exploded perspective view illustrating a stacked structure of internal electrodes in the capacitor body 110 of FIG. 1.

When directions are defined to clearly describe the present aspect, the L-axis, W-axis, and T-axis indicated in the drawings represent the longitudinal direction, the width direction, and the stacking direction of the capacitor body 110, respectively. Herein, the stacking direction (T-axis direction) may be a direction perpendicular to the wide surface (main surface) of the sheet-shaped components, and may be, for example, used in the same concept as the thickness direction of the dielectric layer 111. The longitudinal direction (L-axis direction) may be a direction substantially perpendicular to the stacking direction (T-axis direction) in a direction extending parallel to the wide surface for example, a direction in which the first and second external electrodes 131 and 132 are disposed. The width direction (W-axis direction) may be a direction that extends parallel to the wide surface (main surface) of the sheet-shaped components and is substantially perpendicular to the stacking direction (T-axis direction), and the length of the sheet-like components in the longitudinal direction (L-axis direction) may be longer than the length in the width direction (W-axis direction).

Referring to FIGS. 1 to 4, the multilayered capacitor 100 may include the capacitor body 110, first and second external electrodes 131 and 132 disposed at both ends of the capacitor body 110 which face each other in the longitudinal direction (L-axis direction), and thin films 151a, 151b, 151c, and 151d on the surface of the capacitor body 110.

The capacitor body 110 may have, for example, a substantially hexahedral shape.

In this aspect, for convenience of explanation, in the capacitor body 110, surfaces opposite to each other in the stacking direction (T-axis direction) are defined as first and second surfaces, surfaces connected to the first and second surfaces and facing each other in the longitudinal direction (L-axis direction) are defined as third and fourth surfaces, and surfaces connected to the first and second surfaces, connected to the third and fourth surfaces, and facing each other in the width direction (W-axis direction) are defined as fifth and sixth surfaces. For example, the third or fourth surface may be a surface on the first surface perpendicular to the stacking direction (T-axis direction), and the fifth or sixth surface may be a surface on the second surface perpendicular to the stacking direction (T-axis direction).

For example, the first surface, which is a lower surface, may be a surface facing a mounting direction. In addition, the first to sixth surfaces may be flat, but the present aspect is not limited thereto, for example, the first to sixth surfaces may be curved surfaces with a convex central portion, and an edge of each surface which is a boundary, may be round.

The shape and dimensions of the capacitor body 110 and the number of stacked dielectric layers 111 are not limited to those shown in the drawings of the present embodiment.

The capacitor body 110 is formed by stacking a plurality of the dielectric layers 111 in the stacking direction (T-axis direction) and then sintering them, and includes a plurality of dielectric layers 111, and first and second internal electrodes 121 and 122 which are alternately disposed in the stacking direction (T-axis direction) with the dielectric layers 111 interposed therebetween.

Herein, the boundary between the respective dielectric layers 111 adjacent to each other of the capacitor body 110 may be integrated to the extent that it is difficult to check without using a scanning electron microscope (SEM).

Also, the capacitor body 110 may include an active region and cover portions 112 and 113.

The active region contributes to generating a capacitance of the multilayered capacitor 100. For example, the active region may be a region in which the first and second internal electrodes 121 and 122 are stacked and overlapped with each other along the stacking direction (T-axis direction).

The cover portions 112 and 113 may be respectively disposed on the first and the second surfaces of the active region in the stacking direction (T-axis direction) as stacking-direction margin portions. The cover portions 112 and 113 may be formed by stacking a single dielectric layer 111 or two or more dielectric layers 111 on an upper surface and a lower surface of the active region, respectively.

In addition, the capacitor body 110 may further include width-direction margin portions 114 and 115. The margin portions 114 and 115 may be respectively disposed on the fifth and sixth surfaces of the active region. Such margin portions 114 and 115 may be formed by coating a conductive paste layer for forming internal electrodes on the surface of the dielectric green sheet only to a portion of the surface of the dielectric green sheet, stacking dielectric green sheets on which a conductive paste layer is not coated on both side surfaces of the dielectric green sheet, and firing the same.

The cover portions 112 and 113 and margin portions 114 and 115 serve to prevent damage to the first and second internal electrodes 121 and 122 due to physical or chemical stress.

For example, the dielectric layer 111 may include a ceramic material having a high dielectric constant. For example, the ceramic material may include a dielectric ceramic containing components such as BaTiO₃, CaTiO₃, SrTiO₃, CaZrO₃, and the like. In addition, auxiliary components such as a Mn compound, an Fe compound, a Cr compound, a Co compound, and a Ni compound may be further included in addition to these components. For example, (Ba₁₋ₓCaₓ)TiO₃, Ba(Ti_{1-y}Ca_{y})O₃, (Ba₁₋ₓCaₓ)(Ti_{n-y}Zr_{y})O₃, or Ba(Ti_{1-y}Zr_{y})O₃ in which Ca, Zr, etc. are partially dissolved in BaTiO₃-based dielectric ceramics.

In addition, a ceramic powder, a ceramic additive, an organic solvent, a plasticizer, a binder, a dispersant, and the like may be further added to the dielectric layer 111. The ceramic additive may include, for example, transition metal oxide or transition metal carbide, a rare earth element, magnesium (Mg), or aluminum (Al), and the like.

For example, an average thickness of the dielectric layer 111 may be about 0.5 µm to about 10 µm. In one example, the term "about" may refer to a concept including a minute difference caused by a process error. For example, "about a value" may include not only a case of being "the value", but also a case of having a minute difference caused by a process error or a measurement, recognizable by one of ordinary skill in the art.

The first and second internal electrodes 121 and 122 are electrodes having different polarities, and are alternately disposed to face each other along the stacking direction (T-axis direction) with the dielectric layer 111 interposed therebetween, and one end thereof may be exposed through the third and fourth surfaces of the capacitor body 110.

The first and second internal electrodes 121 and 122 may be electrically insulated from each other by the dielectric layer 111 disposed in the middle.

Ends of the first and second internal electrodes 121 and 122 alternately exposed through the third and fourth surfaces of the capacitor body 110 are connected to the first and second external electrodes 131 and 132, respectively, to be electrically connected.

The first and second internal electrodes 121 and 122 may include a conductive metal, for example, a metal such as Ni, Cu, Ag, Pd, Au, and the like, an alloy thereof, for example a Ag-Pd alloy.

Also, the first and second internal electrodes 121 and 122 may include dielectric particles having the same composition as the ceramic material included in the dielectric layer 111.

The first and second internal electrodes 121 and 122 may be formed using a conductive paste containing a conductive metal. As a method of printing the conductive paste, a screen-printing method or a gravure printing method or the like may be used.

For example, an average thickness of the first and second internal electrodes 121 and 122 may be about 0.1 µm to about 2 µm.

Thin films 151a, 151b, 151c, and 151d are disposed on the surfaces of the capacitor body 110.

For example, the thin films 151a and 151b may be disposed outside the cover portions 112 and 113 of the capacitor body 110 in the stacking direction (T-axis direction), for example, on the first and second surfaces thereof.

As will be described later, when the first and second external electrodes 131 and 132 extend to portions of the first and second surfaces, the thin films 151a and 151b may be disposed inside the first and second external electrodes 131 and 132 on the first and second surfaces, that is, between the capacitor body 110 and the first and second external electrodes 131 and 132.

In addition, the thin films 151c and 151d may be disposed on the surfaces of the margin portions 114 and 115 of the capacitor body 110, for example, on the fifth and sixth surfaces thereof. Accordingly, the thin films 151a, 151b, 151c, and 151d may surround all the surfaces of the capacitor body 110 excluding the third and fourth surfaces where the first and second external electrodes 131 and 132 are disposed. The thin films 151a, 151b, 151c, and 151d may improve air-tightness of the outer portion of the capacitor body 110 to suppress moisture, water vapor, and hydrogen from forming penetration paths and thus improve moisture resistance reliability.

An average thickness of the thin films 151a, 151b, 151c, and 151d may be about 0.1 µm to about 3 µm.

For example, the average thickness of the thin films 151a, 151b, 151c, and 151d may be analyzed by examining cross section samples of the capacitor body 110 cut at the center (1/2 point) of the width direction (W-axis direction) in the longitudinal direction (L-axis direction) and the stacking direction (T-axis direction) or cross-section samples cut at the center (1/2 point) of the longitudinal direction (L-axis direction) in the width direction (W-axis direction) and stacking direction (T-axis direction) with a scanning electron microscope (SEM), a scanning transmission electron microscope (STEM), or the like. In addition, the average thickness may be obtained by measuring a thickness at at least 3, 5, or 10 different points or on the cross-section and then calculating an arithmetic mean thereof.

The cross-section samples of the capacitor body 110 may be, for example, prepared by putting the multilayered capacitor 100 in an epoxy mixed solution to cure it, polishing the capacitor body 110, and fixing and maintaining it in a vacuum atmosphere chamber.

The scanning electron microscope may be, for example, Verios G4 manufactured by Thermofisher Scientific Inc., and the measurement conditions are about 10 kV and about 0.2 nA.

When the thin films 151a, 151b, 151c, and 151d have an average thickness of less than about 0.1 µm, the moisture resistance improvement effect may be insignificant, and when the average thickness is greater than about 3 µm, porous bodies are formed between the thin films 151a, 151b, 151c, and 151d and the cover portions 112 and 113, or the margin portions 114 and 115, rather deteriorating the moisture resistance characteristics.

The thin films 151a, 151b, 151c, and 151d include barium zirconium titanate.

Zirconium (Zr) is an element added in a small amount to a barium titanate (BaTiO₃) ferroelectric which is a main raw material or a dispersion medium mixed in the powder form with barium titanate particles and is thus simultaneously fired with barium titanate.

When added over a predetermined amount, the zirconium (Zr) plays a role of planarizing temperature-dependent capacity change (TCC) as a depressor or inducing a room temperature shift of the temperature-dependent capacity change (TCC) to control temperature characteristics, but when added in a small amount, the zirconium (Zr) plays a role of mainly suppressing grain growth. In addition, when an excessive amount of the zirconium (Zr) is added to the barium titanate, the barium zirconium titanate is formed with rapid grain growth and densification, forming a dielectric with high density. The thin films 151a, 151b, 151c, and 151d include this barium zirconium titanate with high density and may suppress moisture, water vapor, and hydrogen from forming penetration paths, improving the moisture resistance reliability and in addition, improving mechanical strength.

The barium zirconium titanate of the thin films 151a, 151b, 151c, and 151d may include the zirconium in an amount of about 10 parts by mole to about 50 parts by mole, for example, about 20 parts by mole to about 40 parts by mole based on about 100 parts by mole of titanium.

For example, in the thin films 151a, 151b, 151c, and 151d, specific element (e.g., Ba, Ti, and Zr) components may be measured by using nano-XRF, for example, Nano-Synchrotron X-Ray Fluorescence (Nano-SXRF). Herein, the measurement may be conducted by using ID16A-NI(UPBL04) made by ESRF (European Synchrotron Radiation Facility). For example, the prepared cross-section samples of the capacitor body 110 are irradiated by synchrotron X-rays (10 keV or more) to measure a content of the specific elements (e.g., Ba, Ti, and Zr) in the thin films 151a, 151b, 151c, and 151d at least 3 times, 5 times, or 10 times repeatedly and obtain an average thereof and also, to average minimum values and maximum values at at least 3, 5, or 10 different points in the same thin films 151a, 151b, 151c, and 151d and obtain final contents of the specific elements.

When the content of zirconium in the thin films 151a, 151b, 151c, and 151d is less than about 10 parts by mole, the thin films 151a, 151b, 151c, and 151d may not be uniform, but when the content of zirconium in the thin films 151a, 151b, 151c, and 151d is greater than about 50 parts by mole, the thin films 151a, 151b, 151c, and 151d may also not be uniform due to formation of Ba-Zr-based secondary phases.

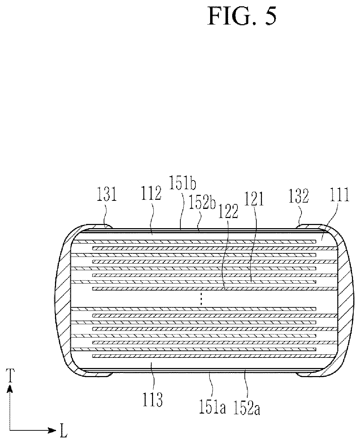

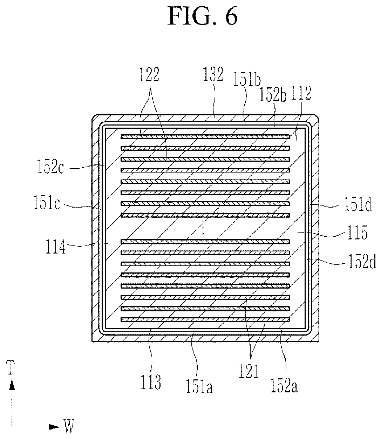

FIGS. 5 and 6 are cross-sectional views of multilayered capacitors 10 according to an exemplary variation of one aspect.

Referring to FIGS. 5 and 6, the multilayered capacitor 100 further includes oxide layers 152a, 152b, 152c, and 152d between the capacitor body 110 and the thin films 151a, 151b, 151c, and 151d.

The oxide layers 152a, 152b, 152c, and 152d are disposed on the surfaces of the capacitor body 110.

For example, the oxide layer 152a, and 152b may be disposed outside the cover portions 112 and 113 of the capacitor body 110 in the stacking direction (T-axis direction), for example, on the first and second surfaces thereof. Herein, the thin films 151a and 151b may be disposed on the oxide layers 152a and 152b outside the capacitor body 110 in the stacking direction (T-axis direction).

In addition, the oxide layers 152c and 152d may be disposed on the surfaces of the margin portions 114 and 115 of the capacitor body 110, for example, the fifth and sixth surfaces thereof. Accordingly, the oxide layers 152a, 152b, 152c, and 152d may surround all the surfaces of the capacitor body 110 excluding the third and fourth surfaces where the first external electrode 131 and the second external electrode 132 are disposed. Herein, the thin films 151c and 151d may be disposed on the oxide layers 152c and 152d outside the capacitor body 110 in the width direction (W-axis direction).

The oxide layers 152a, 152b, 152c, and 152d may further improve the moisture resistance reliability of the outer portion of the capacitor body 110.

An average thickness of the oxide layers 152a, 152b, 152c, and 152d may be about 0 µm to about 5 µm, for example, about 0.1 µm to about 3 µm. The average thickness of the oxide layers 152a, 152b, 152c, and 152d may be measured in the same method as the method of measuring the average thickness of the thin films 151a, 151b, 151c, and 151d and thus will not be reillustrated. When the average thickness of the oxide layers 152a, 152b, 152c, and 152d is greater than about 5 µm, porous bodies are formed between the thin films 151a, 151b, 151c, and 151d and the cover portions 112 and 113, the margin portions 114 and 115, or the oxide layers 152a, 152b, 152c, and 152d, rather deteriorating the moisture resistance characteristics.

The oxide layers 152a, 152b, 152c, and 152d like the thin films 151a, 151b, 151c, and 151d include barium zirconium titanate. However, the barium zirconium titanate of the oxide layers 152a, 152b, 152c, and 152d has a higher oxidation degree than that of the thin films 151a, 151b, 151c, and 151d.

For example, based on a total mol% of the barium zirconium titanate of the thin films 151a, 151b, 151c, and 151d, mol% of barium is x₁, mol% of zirconium is y₁, and mol% of oxygen is z₁, and based on a total mol% of the barium zirconium titanate of the oxide layers 152a, 152b, 152c, and 152d, mol% of barium is x₂, mol% of zirconium is y₂, mol% of oxygen is z₂, wherein z₂ may be larger than z₁.

Herein, in the thin films 151a, 151b, 151c, and 151d and the oxide layers 152a, 152b, 152c, and 152d, specific element (e.g., Ba, Ti, and Zr) contents, which are x₁, y₁, z₁, x₂, y₂, and z₂, are measured in the same method as the method of the specific element contents in the thin films 151a, 151b, 151c, and 151d, which will not be repeatedly illustrated.

For example, z₁:z₂ = about 100:103 to about 100:140. In addition, y₁:y₂ = about 100:70 to about 100:97. When z₂:z₁ is less than about 103:100 or y₂:y₁ is less than about 3:100, the oxide layers 152a, 152b, 152c, and 152d may not be observed by a scanning electron microscope (SEM), and when z₂:z₁ is greater than about 140:100 or when y₂:y₁ is greater than about 30:100, nonuniform grain growth occurs, forming the porous bodies.

The first and second external electrodes 131 and 132 are supplied with voltages of different polarities, and are electrically connected to exposed portions of the first and second internal electrodes 121 and 122, respectively.

According to the above configuration, when a predetermined voltage is applied to the first and second external electrodes 131 and 132, charges are accumulated between the first and second internal electrodes 121 and 122. At this time, a capacitance of the multilayered capacitor 100 is proportional to an overlapping area of the first and second internal electrodes 121 and 122 overlapping each other along the stacking direction (T-axis direction) in the active region.

The first and second external electrodes 131 and 132 may respectively include a first connection portion and a second connection portion disposed on the third and fourth surfaces of the capacitor body 110 and connected to the first and second internal electrodes 121 and 122, and may also include a first band portion and a second band portion disposed at each corner where the third and fourth surfaces, and the first and second surfaces or the fifth and sixth surfaces of the capacitor body 110 meet.

The first and the second band portions may extend from the first connection portion and the second connection portion to portions of the first and second surfaces or the fifth and sixth surfaces of the capacitor body 110, respectively. The first and the second band portions may serve to improve adhesion strength of the first and second external electrodes 131 and 132.

In one example, the first and the second external electrodes 131 and 132 may each include a sintered metal layer in contact with the capacitor body 110, a conductive resin layer configured to cover the sintered metal layer, and a plating layer configured to cover the conductive resin layer.

The sintered metal layer may include a conductive metal and glass.

In one example, the sintered metal layer may be a conductive metal and may include copper (Cu), nickel (Ni), silver (Ag), palladium (Pd), gold (Au), platinum (Pt), tin (Sn), tungsten (W), titanium (Ti), lead (Pb), an alloy thereof, or a combination thereof, and for example, the copper (Cu) may include a copper (Cu) alloy. When the conductive metal includes copper, a metal other than copper may be included in an amount of less than or equal to about 5 parts based on 100 parts by mole of copper.

In one example, the sintered metal layer may include a composition of glassy oxide, for example one or more selected from a silicon oxide, a boron oxide, an aluminum oxide, a transition metal oxide, an alkali metal oxide, and an alkaline-earth metal oxide. Herein, the transition metal may be selected from zinc (Zn), titanium (Ti), copper (Cu), vanadium (V), manganese (Mn), iron (Fe), and nickel (Ni), the alkali metal may be selected from lithium (Li), sodium (Na), and potassium (K), and the alkaline-earth metal may be selected from magnesium (Mg), calcium (Ca), strontium (Sr), and barium (Ba).

In the sintered metal layer, contents of the conductive metal and the glass are not particularly limited, but an average area of the conductive metal on the cross-section (cross-section in the L-axis direction and T-axis direction) perpendicular to the stacking direction (W-axis direction) of the multilayered capacitor 100 may be, for example, about 30 % to about 90 % or about 70 % to about 90 % of a total area of the sintered metal layer.

Optionally, the conductive resin layer is formed on the sintered metal layer and, for example, may entirely cover the sintered metal layer. On the other hand, the first external electrode 131 and the second external electrode 132 may not include the sintered metal layer. The conductive resin layer may directly contact the capacitor body 110.

The conductive resin layer extends toward the first and the second surfaces or the fifth and sixth surfaces of the capacitor body 110. A length of a region (i.e., band portion) disposed by the conductive resin layer extending to the first and the second surfaces or the fifth and sixth surfaces of the capacitor body 110 may be longer than that of a region (i.e., band portion) disposed by the sintered metal layer extending to the first and the second surfaces or the fifth and sixth surfaces of the capacitor body 110. In other words, the conductive resin layer may be formed on the sintered metal layer and may entirely cover the sintered metal layer.

The conductive resin layer includes a resin and a conductive metal.

The resin included in the conductive resin layer is not particularly limited, as long as the resin has bondability and impact absorption and is mixed with the conductive metal powder into a paste, and, for example, may include a phenol resin, an acrylic resin, a silicone resin, an epoxy resin, or a polyimide resin.

The conductive metal included in the conductive resin layer may play a role of electrically connecting the first internal electrode 121 and the second internal electrode 122 or the sintered metal layer.

The conductive metal included in the conductive resin layer may have a spherical shape, a flake shape, or a combination thereof. In other words, the conductive metal may have the flake shape alone or the spherical shape alone, but the flake shape and the spherical shape may be mixed.

Herein, the spherical shape may not be a perfectly spherical shape, for example, a length ratio of a major axis to a minor axis (major axis/minor axis) may be about 1.45 or less. The flake-shaped powder means powder having a flat and elongated shape, and the length ratio of the major axis to the minor axis (major axis/minor axis) is not particularly limited but for example, about 1.95 or more.

The first and second external electrodes 131 and 132 may further include a plating layer outside the conductive resin layer.

The plating layer is nickel (Ni), copper (Cu), tin (Sn), palladium (Pd), platinum (Pt), gold (Au), silver (Ag), tungsten (W), titanium (Ti), or lead (Pb), alone or an alloy thereof. For example, the plating layer may be a nickel (Ni) plating layer or a tin (Sn) plating layer, and may have a form in which a nickel (Ni) plating layer and a tin (Sn) plating layer are sequentially stacked or a tin (Sn) plating layer, a nickel (Ni) plating layer, and a tin (Sn) plating layer are sequentially stacked. In addition, the plating layer may include a plurality of nickel (Ni) plating layers and/or a plurality of tin (Sn) plating layers.

The plating layer may improve mountability of the multilayered capacitor 100 with a board, structural reliability, external durability, heat resistance, and equivalent series resistance (ESR).

A method of manufacturing a multilayered capacitor according to another aspect includes manufacturing a capacitor body including a dielectric layer and an internal electrode, and forming an external electrode outside the capacitor body.

First, the manufacturing of the capacitor body is described.

In the manufacturing process of the capacitor body, a dielectric slurry formed into a dielectric layer after firing, and a conductive paste formed into an internal electrode after firing are prepared.

The dielectric slurry is, for example, prepared by mixing the barium titanate (BaTiO₃) as main component powder with subcomponent powder to obtain mixed powder of the main component and the subcomponent. For example, the subcomponent powder may be BaCO₃, MgCO₃, SiO₂, Al₂O₃, Dy₂O₃, Mn₃O₄, V₂O₅, or a combination thereof in any content.

The dielectric slurry may optionally further include a solvent and an additive together with the mixed powder of the main component and the subcomponent.

The additive may be a dispersant, a binder, or a plasticizer, and, for example, may further include other additives such as a lubricant, an antistatic agent, etc.

The dispersant may be, for example, a phosphoric acid ester-based dispersant or a polycarboxylic acid-based dispersant. A content of the dispersant may be about 0.1 parts by weight to about 5 parts by weight or about 0.3 parts by weight to about 3 parts by weight, based on about 100 parts by weight of the mixed powder of the main component and the subcomponent. When the content of the dispersant is about 0.1 parts by weight to about 5 parts by weight, the dispersant may have sufficient effects and reduce impurities in the dielectric layer.

The binder may be for example an acrylic resin, a polyvinylbutyl resin, a polyvinylacetal resin, or an ethyl cellulose resin. The content of the binder may be about 0.1 parts by weight to about 50 parts by weight or about 3 parts by weight to about 30 parts by weight, based on about 100 parts by weight of the mixed power of the main component and the subcomponent. When the content of the binder is about 0.1 parts by weight to about 50 parts by weight, the binder may have sufficient effects and reduce impurities in the dielectric layer.

The plasticizer may include, for example a phthalate-based plasticizer such as dioctyl phthalate, benzyl butyl phthalate, dibutyl phthalate, dihexyl phthalate, di(2-ethylhexyl) phthalate (DOP), or di(2-ethyl butyl) phthalate, an adipate-based plasticizer such as dihexyl adipate, or di(2-ethylhexyl) adipate (DOA), a glycol-based plasticizer such as ethylene glycol, diethylene glycol, or triethylene glycol, a glycol ester-based plasticizer such as triethylene glycol dibutyrate, triethylene glycol di(2-ethyl dibutyrate), or triethylene glycol di(2-ethylhexanoate). A content of the plasticizer may be about 0.1 parts by weight to about 20 parts by weight or about 1 part by weight to about 10 parts by weight, based on about 100 parts by weight of the mixed power of the main component and the subcomponent. When the content of the plasticizer may be about 0.1 parts by weight to about 20 parts by weight, the plasticizer may have sufficient effects and reduce impurities in the dielectric layer.

The solvent may include, for example an aqueous solvent such as water, an alcohol-based solvent such as ethanol, methanol, or benzyl alcohol, or methoxy ethanol, a glycol-based solvent such as ethylene glycol, or diethylene glycol, a ketone-based solvent such as acetone, methyl ethyl ketone, methyl isobutyl ketone, or cyclohexanone, an ester-based solvent such as butyl acetate, ethyl acetate, carbitol acetate, or butyl carbitol acetate, an ether-based solvent such as methyl cellosolve, ethyl cellosolve, butyl ether, or tetrahydrofuran, an aromatic based solvent such as benzene, toluene, or xylene. Considering the solubility or dispersibility of various additives in the dielectric slurry, an alcohol-based solvent or aromatic solvent may be used as a solvent. A content of the solvent may be about 50 parts by weight to about 1000 parts by weight or about 100 parts by weight to about 500 parts by weight, based on about 100 parts by weight of the mixed power of the main component and the subcomponent. When the content of the solvent may be about 50 parts by weight to about 1000 parts by weight, the main component, the subcomponent, and additives, etc., may be sufficiently mixed, and the solvent may be easily removed in the following process.

The mixing of the main component and the subcomponent may be performed by using a wet ball mill or a stirring mill. When zirconia balls are used in the wet ball mill, a plurality of zirconia mills with a diameter of about 0.1 mm to about 10 mm are used for about 8 hours to about 48 hours or about 10 hours to about 24 hours.

Next, the dielectric slurry is molded into a sheet shape.

The dielectric slurry may be molded into a sheet shape, for example a doctor blade method, or a tape-forming method such as the calender roll method, for example using an on-roll forming coater with head discharge, and then dried to obtain a dielectric green sheet.

The conductive paste for the internal electrode is prepared by kneading conductive powder made of a conductive metal or an alloy thereof with a binder or a solvent. The conductive paste for the internal electrode may include ceramic powder (for example, barium titanate powder) as a co-material, if necessary. The co-material may act to suppress sintering of the conductive powder during the firing process.

On the surface of the dielectric green sheet, the conductive paste for the internal electrode is coated in a predetermined pattern by various printing methods such as screen printing or a transfer method. After stacking a plurality of layers of dielectric green sheets on which internal electrode patterns are formed, a dielectric green sheet stack is obtained by pressing in the stacking direction. At this time, the dielectric green sheets and internal electrode patterns may be stacked so that the dielectric green sheets may be disposed on the upper and lower surfaces of the dielectric green sheet stack in the stacking direction.

Optionally, the obtained dielectric green sheet stack may be cut into predetermined dimensions by dicing or the like.

Next, a composition for forming a thin film is coated on the surface of the dielectric green sheet stack.

The composition for forming the thin film includes zirconium oxide. In addition, the composition for forming the thin film may further include a solvent and an additive, and the additive may be a dispersant, a binder, or a plasticizer, and, for example, may further include other additives such as a lubricant, an antistatic agent, etc. Description of the solvent and additives are the same as those described in the dielectric slurry, and will not be repeatedly illustrated again.

The composition for forming the thin film may be coated on the entire surfaces of the dielectric green sheet stack, for example, on the first, second, third, fourth, fifth, and sixth surfaces. Or, the composition for forming the thin film may be coated on the first, second, fifth, and sixth surfaces excluding the third and fourth surfaces where the first and second external electrodes are supposed to be formed. When the composition for forming a thin film is coated on the third and fourth surfaces, as will be described later, the thin films disposed on the third and fourth surfaces may be removed by a surface treatment about the third and fourth surfaces, which is a pre-treatment process for forming the first and second external electrodes.

In addition, the dielectric green sheet stack may be solidified and dried to remove the plasticizer, etc. and barrel-polished by using a centrifugal barrel machine or the like after the solidification-drying. In the barrel polishing, the dielectric green sheet stack is put with a medium and a polishing liquid into a barrel container, and then the barrel container is applied with rotational motion or vibration to polish unnecessary parts such as burrs and the like generated during the cutting. In addition, after the barrel polishing, the dielectric green sheet stack is washed with a cleaning solution such as water and the like and dried.

The dielectric green sheet stack is treated to remove the binder and fired, obtaining the capacitor body.

The binder removal may be performed under conditions appropriately adjusted according to a main component composition of the dielectric layer or a main component composition of the internal electrode. For example, the binder removal may be performed by increasing a temperature at about 5 °C/hr to about 300 °C/h and maintaining about 180 °C to about 400 °C for about 0.5 h to about 24 h. The binder removal may be performed under an air atmosphere or a reducing atmosphere.

The firing treatment may be performed under conditions appropriately adjusted according to the main component composition of the dielectric layer or the main component composition of the internal electrode. For example, the firing may be performed at about 1200 °C to about 1350 °C or about 1220 °C to about 1300 °C for about 0.5 hours to about 8 hours or about 1 hour to about 3 hours. The firing may be performed under a reducing atmosphere, for example, an atmosphere in which a mixed gas of nitrogen (N₂) and hydrogen (H₂) is humidified. When the internal electrode includes nickel (Ni) or a nickel (Ni) alloy, an oxygen partial pressure may be about 1.0×10⁻¹⁴ MPa to about 1.0×10⁻¹⁰ MPa under the firing atmosphere.

In this way, the composition for forming a thin film including zirconium oxide is coated on all the surfaces of the dielectric green sheet stack, and then simultaneously fired with the dielectric green sheet stack to induce a strong reduction reaction on the surfaces, forming a thin film with high density including barium zirconium titanate on the capacitor body surfaces. In addition, an oxide layer including more oxidized barium zirconium titanate than the barium zirconium titanate of the thin film is also formed between the capacitor body and the thin film.

After the firing treatment, annealing may be performed, if needed. The annealing is performed for re-oxidizing the dielectric layer, and when the firing is performed under a reducing atmosphere, the annealing may be performed. The annealing may be performed under conditions appropriately adjusted according to the main component composition and the like of the dielectric layer. For example, the annealing may be performed at about 950 °C to about 1150 °C for greater than about 0 h and less than about 20 h by increasing the temperature at about 50 °C/h to about 500 °C/h. The annealing may be performed under a humid nitrogen gas (N₂) atmosphere, wherein an oxygen partial pressure may be about 1.0×10⁻⁹ MPa to about 1.0×10⁻⁵ MPa.

In the binder removal treatment, the firing treatment, or the annealing treatment, in order to humidify nitrogen gas, a mixed gas, or the like, a wetter or the like may be, for example, used, wherein a water temperature may be about 5 °C to about 75 °C. The binder removal treatment, the firing treatment, and the annealing treatment may be performed continuously or independently.

Optionally, the third and fourth surfaces of the obtained capacitor body may be surface-treated through sandblasting, laser irradiation, barrel polishing, or the like. This surface treatment may expose the ends of the first and second internal electrodes on the outer surfaces of the third and fourth surfaces, thereby improving the electrical connection of the first and second external electrodes and first and second internal electrodes and easily forming the alloy portion.

An external electrode is formed on the outer surface of the obtained capacitor body.

For example, a sintered metal layer may be formed by coating a paste for forming a sintered metal layer on an external electrode and then sintering the paste to form a sintered metal layer.

The paste for forming the sintered metal layer may include a conductive metal and glass. The conductive metal and glass are the same as described above and will not be repeatedly illustrated again. In addition, the paste for forming a sintered metal layer may optionally include a subcomponent such as a binder, a solvent, a dispersant, a plasticizer, or oxide powder, and the like. For example, the binder may include ethyl cellulose, acryl, butyral, or the like, and the solvent may include an organic solvent such as terpineol, butyl carbitol, alcohol, methylethylketone, acetone, or toluene, and the like, or an aqueous solvent.

A method of coating the paste for forming the sintered metal layer on the outer surface of the capacitor body may include various printing methods such as a dip method, screen printing, and the like, a coating method by using a dispenser, a spray method by using a spray, and the like. The paste for forming the sintered metal layer may be coated on at least the third and fourth surfaces of at least capacitor body, and optionally, on a portion of the first, second, fifth, or sixth surface where the band portions of the first and second external electrodes are formed.

Subsequently, the capacitor body on which the paste for forming the sintered metal layer is coated is dried and then sintered at a temperature of about 700 °C to about 1000 °C for about 0.1 h to about 3 h to form a sintered metal layer.

Optionally, on the outer surface of the obtained capacitor body, a paste for forming a conductive resin layer is coated and cured to form a conductive resin layer.

The paste for forming the conductive resin layer may include a resin, and optionally a conductive metal or a non-conductive filler. The conductive metal and the resin are the same as described above, and will not be repeatedly illustrated again. In addition, the paste for forming the conductive resin layer may optionally include a subcomponent such as a binder, a solvent, a dispersant, a plasticizer, or oxide powder, and the like. For example, the binder may include ethyl cellulose, acryl, butyral, or the like, and the solvent may include an organic solvent such as terpineol, butyl carbitol, alcohol, methylethylketone, acetone, or toluene, and the like or an aqueous solvent.

For example, a method of forming the conductive resin layer may include dipping the capacitor body 110 into the paste for forming the conductive resin layer to form the conductive resin layer and curing it, screen-printing or gravure-printing the paste for forming the conductive resin layer on the surface of the capacitor body 110, or coating the paste for forming the conductive resin layer, and then curing it.

Subsequently, a plating layer is formed outside the conductive resin layer.

For example, the plating layer may be formed by a plating method, or may be formed by sputtering or electroplating (electric deposition).

Hereinafter, specific embodiments of the invention are presented. However, the examples described below are only for specifically illustrating or explaining the invention, and the scope of the invention is not limited thereto.

### [Preparation Example: Manufacturing of Multilayered Capacitor]

A dielectric slurry is prepared by using BaTiO₃ powder with an average particle size of 200 nm as a main component, additives including BaCO₃, MgCO₃, SiO₂, Al₂O₃, Dy₂O₃, Mn₃O₄, and V₂O₅, ethanol, and toluene as a solvent with zirconia balls as dispersion media and mixing them with a dispersant and a binder and then bead-milling the mixture.

The prepared dielectric slurry is coated and molded into a sheet with a thickness of 1.0 µm or less, preparing a dielectric green sheet. On the molded dielectric green sheet, a nickel (Ni) electrode is printed. On the other hand, cover sheets (each thickness of 3 µm) are stacked into 30 layers to form upper and lower cover portions. The dielectric green sheet is stacked with the upper and lower cover portions and then pressed and cut, manufacturing a dielectric green sheet stack. The cutting is performed by using a cutter into a size of 1.0 mm X 0.5 mm and 0.6 mm X 0.3 mm.

On the surface of the dielectric green sheet stack, a composition for forming a thin film including zirconium oxide is coated. In the composition for forming a thin film, a content of zirconium oxide may be controlled to adjust a mole ratio of zirconium to 100 parts by mole of titanium of barium zirconium titanate in the formed thin film.

The dielectric green sheet stack is calcined to remove the binder and then fired under a reduction atmosphere of 0.1 % H₂ / 99.9 % N₂ (H₂O / H₂ / N₂ atmosphere) at 1050 °C to 1250 °C for 1 hour and heat-treated under an N₂ atmosphere at 1000 °C for 3 hours. On the outside of the fired capacitor body, an external electrode is formed with a Cu paste through a termination process and electrode firing.

### [Experimental Examples]

Each multilayered capacitor according to the examples and the comparative examples is manufactured by adjusting the mole ratio of zirconium to 100 parts by mole of titanium of barium zirconium titanate in the preparation example as shown in Table 1.

Regarding the manufactured multilayered capacitors, a content of zirconium to 100 parts by mole of titanium of barium zirconium titanate in each thin film, presence or absence of an oxide layer, presence or absence of surface pores, a size change of dielectric grains, and moisture resistance reliability are measured, and the results are shown in Table 1.

In the thin film, the content of zirconium is measured in the following method.

Each cross-section sample of the multilayered capacitors is obtained by putting and curing the multilayered capacitors in an epoxy mixed solution, polishing the surfaces of the capacitor body in the longitudinal direction (L-axis direction) and the stacking direction (T-axis direction) to a half point toward the width direction (W-axis direction), and then fixing and maintaining them under a vacuum atmosphere chamber.

A Nano-Synchrotron X-Ray Fluorescence (Nano-SXRF) analysis of the cross-section samples of the capacitor bodies is performed by using ID16A-NI (UPBL04) made by ESRF (European Synchrotron Radiation Facility). Herein, each mole ratio of barium (Ba), titanium (Ti), and oxygen (O) in each thin film is repeatedly measured three times by irradiating synchrotron X-rays (10 keV or more). In addition, each final mole ratio of barium (Ba), titanium (Ti), and oxygen (O) is obtained by calculating an average value of minimum values and maximum values measured at ten different points on the same cross-section.

In Table 1, when an oxide layer is present, "O" is given, but when not present, "X" is given.

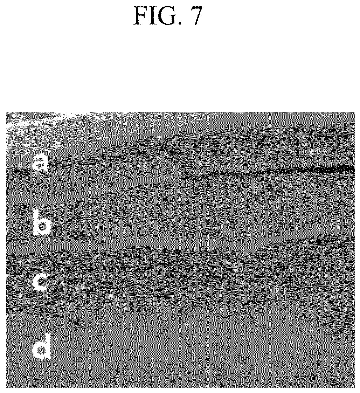

FIG. 7 is a scanning electron micrograph of a cross-sectional sample of the multilayered capacitor manufactured in Example 1. In FIG. 7, a is a coating layer using FIB (Focused Ion Beam) for examining the cross-section, b is the thin film, c is the oxide layer, and d is a cover layer. Referring to FIG. 7, in the multilayered capacitor according to Example 1, the thin film and the oxide layer are formed.

When the surface pores are present, "O" is given, but when not present, "X" is given, wherein "O" is judged as N.G.

The size change of dielectric grains is evaluated by giving "O" when the dielectric grains from the surface of the thin film to a depth of 500 nm have an average size of greater than 70 % of that of the dielectric grains in the cover portion or margin portion, but "X" when 70 % or less, wherein "X" is judged as N.G.

The moisture resistance reliability is evaluated with ESPEC (PR-3J, 8585) equipment by giving "O", when the number of the multilayered capacitors maintained for 20 hours or more under conditions of 85 °C, relative humidity (R.H.) of 85 %, and 32 V is 20 % or more, but "X", when the number of the multilayered capacitors is less than 20 %, wherein "X" is judged as N.G.

The presence or absence of the oxide layer, the presence or absence of surface pores, the size change of dielectric grains, and the moisture resistance reliability are measured, and the results are shown in Table 1.

**(Table 1)**

| | Mole ratios of Zr in the thin film (relative to 100 moles of Ti) | Presence of oxide layer | Presence of surface pores | Size changes of dielectric grains | Moisture resistance reliability |
|---|---|---|---|---|---|
| Comparative Example 1 | 3 | X | X | X | X |
| Comparative Example 2 | 5 | X | X | X | X |
| Example 1 | 10 | O | X | X | O |
| Example 2 | 30 | O | X | X | O |
| Example 3 | 50 | O | X | X | O |
| Example 4 | 55 | O | X | O | O |
| Example 5 | 60 | O | X | O | O |
| Comparative Example 3 | 65 | O | O | O | X |

Referring to Table 1, when the content of zirconium (Zr) is low, there is no significant effect, but when the content of zirconium (Zr) is excessively high, a concentration of zirconium increases with a rapid grain growth of the thin film rapidly grows, forming pores on the surface, which is accompanied by a decrease in a size of dielectric grains on the surface.

The scope of the invention is defined by the appended claims.

## Claims

1. A multilayered capacitor (100), comprising:
a capacitor body (110) including a dielectric layer (111) and an internal electrode (121, 122);
an external electrode (131, 132) disposed on the capacitor body; and
a thin film (151a, 151b, 151c 151d) disposed on a surface of the capacitor body and
including barium zirconium titanate,
**characterized in that**
the barium zirconium titanate in the thin film includes zirconium in an amount of 10 parts by mole to 50 parts by mole based on 100 parts by mole of titanium, and
the multilayer capacitor further comprises an oxide layer (152a, 152b, 152c, 152d) disposed between the capacitor body and the thin film and including barium zirconium titanate.

2. The multilayered capacitor of claim 1, wherein
the barium zirconium titanate in the thin film includes zirconium in an amount of 20 parts by mole to 40 parts by mole based on 100 parts by mole of titanium.

3. The multilayered capacitor of claim 1 or 2, wherein
an average thickness of the thin film is 0.1 µm to 3 µm.

4. The multilayered capacitor of one of claims 1 to 3, wherein
the capacitor body includes a cover portion (112, 113) disposed on the dielectric layer and the internal electrode in a stacking direction, and
the thin film is disposed on the cover portion; or
wherein
the capacitor body has a first side and a second side perpendicular to a stacking direction of the dielectric layer and the internal electrode,
the external electrode is disposed on the first side,
the capacitor body further includes a margin portion (114, 115) disposed on the second side, and
the thin film is disposed on the margin portion.

5. The multilayered capacitor of claim 1, wherein
z₂ is greater than z₁, in which z₁ is mol% of oxygen relative to the total barium zirconium titanate in the thin film and z₂ is mol% of oxygen relative to the total barium zirconium titanate in the oxide layer.

6. The multilayered capacitor of claim 5, wherein
y₁:y₂ *=* 100:70 to 100:97, in which y₁ is mol% of zirconium relative to the total barium zirconium titanate in the thin film and y₂ is mol% of zirconium relative to the total barium zirconium titanate in the oxide layer.

7. The multilayered capacitor of claim 5, wherein
z₁:z₂ = 100:103 to 100:140.

8. The multilayered capacitor of claim 5, wherein
an average thickness of the oxide layer is less than or equal to 5 µm.

9. A multilayered capacitor (100), comprising:
a capacitor body (110) including a dielectric layer (111) and an internal electrode(121, 122);
an external electrode (131, 132) disposed on the capacitor body; and
a thin film (151a, 151b, 151c 151d) disposed on the capacitor body and including barium zirconium titanate;
**characterized in that**
the multilayered capacitor further comprises an oxide layer (152a, 152b, 152c, 152d) disposed between the capacitor body and the thin film and including barium zirconium titanate, and
z₂ is greater than z₁, in which z₁ is mol% of oxygen relative to the total barium zirconium titanate in the thin film and z₂ is mol% of oxygen relative to the total barium zirconium titanate in the oxide layer.

10. The multilayered capacitor of claim 9, wherein
y₁:y₂ *=* 100:70 to 100:97, in which y₁ is mol% of zirconium relative to the total barium zirconium titanate in the thin film and y₂ is mol% of zirconium relative to the total barium zirconium titanate in the oxide layer.

11. The multilayered capacitor of claim 9, wherein
z₁:z₂ = 100:103 to 100:140; and/or
wherein
the barium zirconium titanate of the thin film includes zirconium in an amount of 20 parts by mole to 40 parts by mole based on 100 parts by mole of titanium; and/or wherein
an average thickness of the thin film is 0.1 µm to 3 µm; and/or
wherein
an average thickness of the oxide layer is less than or equal to 5 µm.

12. The multilayered capacitor of one of claims 1 to 11, wherein
the capacitor body includes a cover portion (112, 113) disposed on the dielectric layer and the internal electrode in a stacking direction, and
the oxide layer is disposed on the cover portion; or
wherein
the capacitor body has a first side and a second side perpendicular to a stacking direction of the dielectric layer and the internal electrode,
the external electrode is disposed on the first side,
the capacitor body further includes a margin portion (114, 115) disposed on the second side, and
the oxide layer is disposed on the margin portion.

13. A method of manufacturing a multilayered capacitor (100), comprising
preparing a dielectric green sheet, and forming a conductive paste layer on a surface of the dielectric green sheet;
stacking the dielectric green sheet with the conductive paste layer to form a dielectric green sheet stack;
coating a composition for forming a thin film (151a, 151b, 151c 151d) on the dielectric green sheet stack;
firing the dielectric green sheet stack to form a capacitor body (110); and
forming an external electrode (131, 132) on the capacitor body,
wherein the composition for forming the thin film includes zirconium oxide, **characterized in that**
the thin film includes barium zirconium titanate including zirconium in an amount of 10 parts by mole to 50 parts by mole based on 100 parts by mole of titanium, and
the multilayer capacitor further comprises an oxide layer (152a, 152b, 152c, 152d) disposed between the capacitor body and the thin film and including barium zirconium titanate.

## Patentansprüche

1. Mehrschichtkondensator (100), umfassend:
einen Kondensatorkörper (110) mit einer dielektrischen Schicht (111) und einer Innenelektrode (121, 122);
eine auf dem Kondensatorkörper angeordnete Außenelektrode (131, 132); und
einen Dünnfilm (151a, 151b, 151c, 151d), der auf einer Oberfläche des Kondensatorkörpers angeordnet ist und Barium-Zirkonium-Titanat umfasst,
**dadurch gekennzeichnet, dass**
das Barium-Zirkonium-Titanat in dem Dünnfilm Zirkonium in einer Menge von 10 Molteilen bis 50 Molteilen, bezogen auf 100 Molteile Titan, umfasst, und
der Mehrschichtkondensator weiterhin eine Oxidschicht (152a, 152b, 152c, 152d) umfasst, die zwischen dem Kondensatorkörper und dem Dünnfilm angeordnet ist und Barium-Zirkonium-Titanat enthält.

2. Mehrschichtkondensator nach Anspruch 1, bei dem
das Barium-Zirkonium-Titanat in dem Dünnfilm Zirkonium in einer Menge von 20 Molteilen bis 40 Molteilen, bezogen auf 100 Molteile Titan, umfasst.

3. Mehrschichtkondensator nach Anspruch 1 oder 2, bei dem
die durchschnittliche Dicke des Dünnfilms 0,1 µm bis 3 µm beträgt.

4. Mehrschichtkondensator nach einem der Ansprüche 1 bis 3, bei dem
der Kondensatorkörper einen Abdeckabschnitt (112, 113) umfasst, der in Stapelrichtung auf der dielektrischen Schicht und der Innenelektrode angeordnet ist, und
der Dünnfilm auf dem Abdeckabschnitt angeordnet ist; oder
der Kondensatorkörper eine erste Seite und eine zweite Seite hat, die senkrecht zu der Stapelrichtung der dielektrischen Schicht und der Innenelektrode verlaufen,
die Außenelektrode auf der ersten Seite angeordnet ist,
der Kondensatorkörper weiterhin einen Randabschnitt (114, 115) umfasst, der auf der zweiten Seite angeordnet ist, und
der Dünnfilm auf dem Randabschnitt angeordnet ist.

5. Mehrschichtkondensator nach Anspruch 1, bei dem
z₂ größer ist als z₁, wobei z₁ den Molprozentanteil von Sauerstoff bezogen auf das gesamte Barium-Zirkonium-Titanat in dem Dünnfilm und z₂ den Molprozentanteil von Sauerstoff bezogen auf das gesamte Barium-Zirkonium-Titanat in der Oxidschicht angibt.

6. Mehrschichtkondensator nach Anspruch 5, bei dem
y₁:y₂ = 100:70 bis 100:97, wobei y₁ den Molprozentanteil an Zirkonium bezogen auf das gesamte Barium-Zirkonium-Titanat in dem Dünnfilm und y₂ den Molprozentanteil an Zirkonium bezogen auf das gesamte Barium-Zirkonium-Titanat in der Oxidschicht angibt.

7. Mehrschichtkondensator nach Anspruch 5, bei dem z₁:z₂ = 100:103 bis 100:140 beträgt.

8. Mehrschichtkondensator nach Anspruch 5, bei dem
eine durchschnittliche Dicke der Oxidschicht kleiner oder gleich 5 µm ist.

9. Mehrschichtkondensator (100), umfassend:
einen Kondensatorkörper (110) mit einer dielektrischen Schicht (111) und einer Innenelektrode (121, 122);
eine auf dem Kondensatorkörper angeordnete Außenelektrode (131, 132); und
einen auf dem Kondensatorkörper angeordneten Dünnfilm (151a, 151b, 151c, 151d), der Barium-Zirkonium-Titanat umfasst;
**dadurch gekennzeichnet, dass**
der Mehrschichtkondensator weiterhin eine Oxidschicht (152a, 152b, 152c, 152d) umfasst, die zwischen dem Kondensatorkörper und dem Dünnfilm angeordnet ist und Barium-Zirkonium-Titanat umfasst, und
z₂ größer ist als z₁, wobei z₁ den Molprozentanteil von Sauerstoff bezogen auf das gesamte Barium-Zirkonium-Titanat in dem Dünnfilm und z₂ den Molprozentanteil von Sauerstoff bezogen auf das gesamte Barium-Zirkonium-Titanat in der Oxidschicht angibt.

10. Mehrschichtkondensator nach Anspruch 9, bei dem
y₁:y₂ = 100:70 bis 100:97, wobei y₁ den Molprozentsatz an Zirkonium bezogen auf das gesamte Barium-Zirkonium-Titanat in dem Dünnfilm und y₂ den Molprozentsatz an Zirkonium bezogen auf das gesamte Barium-Zirkonium-Titanat in der Oxidschicht angibt.

11. Mehrschichtkondensator nach Anspruch 9, bei dem
z₁:z₂ = 100:103 bis 100:140; und/oder
das Barium-Zirkonium-Titanat des Dünnfilms Zirkonium in einer Menge von 20 Molteilen bis 40 Molteilen, bezogen auf 100 Molteile Titan umfasst, und/oder
die durchschnittliche Dicke des Dünnfilms 0,1 µm bis 3 µm beträgt; und/oder
die durchschnittliche Dicke der Oxidschicht kleiner oder gleich 5 µm ist.

12. Mehrschichtkondensator nach einem der Ansprüche 1 bis 11, bei dem
der Kondensatorkörper einen Abdeckabschnitt (112, 113) umfasst, der in einer Stapelrichtung auf der dielektrischen Schicht und der Innenelektrode angeordnet ist, und die Oxidschicht auf dem Abdeckabschnitt angeordnet ist; oder
der Kondensatorkörper eine erste Seite und eine zweite Seite hat, die senkrecht zu der Stapelrichtung der dielektrischen Schicht und der Innenelektrode stehen,
die Außenelektrode auf der ersten Seite angeordnet ist,
der Kondensatorkörper weiterhin einen Randabschnitt (114, 115) umfasst, der auf der zweiten Seite angeordnet ist, und
die Oxidschicht auf dem Randabschnitt angeordnet ist.

13. Verfahren zum Herstellen eines mehrschichtigen Kondensators (100), umfassend:
Vorbereiten einer dielektrischen Rohplatte und Ausbilden einer leitfähigen Pastenschicht auf einer Oberfläche der dielektrischen Rohplatte;
Stapeln der dielektrischen Rohplatte mit der leitfähigen Pastenschicht, um einen Stapel aus dielektrischen Rohplatten auszubilden;
Aufbringen einer Zusammensetzung zum Ausbilden eines Dünnfilms (151a, 151b, 151c, 151d) auf den Stapel aus dielektrischen Rohplatten;
Brennen des Stapels aus dielektrischen Rohplatten, um einen Kondensatorkörper (110) auszubilden; und
Ausbilden einer Außenelektrode (131, 132) auf dem Kondensatorkörper,
wobei die Zusammensetzung zum Ausbilden des Dünnfilms Zirkoniumoxid umfasst,
**dadurch gekennzeichnet, dass**
der Dünnfilm Barium-Zirkonium-Titanat umfasst, das Zirkonium in einer Menge von 10 Molteilen bis 50 Molteilen, bezogen auf 100 Molteile Titan, umfasst, und
der Mehrschichtkondensator weiterhin eine Oxidschicht (152a, 152b, 152c, 152d) umfasst, die zwischen dem Kondensatorkörper und dem Dünnfilm angeordnet ist und Barium-Zirkonium-Titanat umfasst.

## Revendications

1. Condensateur multicouche (100), comprenant :
un corps de condensateur (110) comportant une couche diélectrique (111) et une électrode interne (121, 122) ;
une électrode externe (131, 132) disposée sur le corps de condensateur ; et
un film mince (151a, 151b, 151c, 151d) disposé sur une surface du corps de condensateur et comportant du titanate de zirconium et baryum,
**caractérisé en ce que**
le titanate de zirconium et baryum dans le film mince comporte du zirconium selon une quantité de 10 parties par mole à 50 parties par mole sur la base de 100 parties par mole de titane, et
le condensateur multicouche comprend en outre une couche d'oxyde (152a, 152b, 152c, 152d) disposée entre le corps de condensateur et le film mince et comportant du titanate de zirconium et baryum.

2. Condensateur multicouche selon la revendication 1, dans lequel le titanate de zirconium et baryum dans le film mince comporte du zirconium selon une quantité de 20 parties par mole à 40 parties par mole sur la base de 100 parties par mole de titane

3. Condensateur multicouche selon la revendication 1 ou 2, dans lequel une épaisseur moyenne du film mince est de 0,1 µm à 3 µm.

4. Condensateur multicouche selon l'une des revendications 1 à 3, dans lequel le corps de condensateur comporte une partie de couvercle (112, 113) disposée sur la couche diélectrique et l'électrode interne dans une direction d'empilement, et
le film mince est disposé sur la partie de couvercle ; ou
dans lequel
le corps de condensateur a un premier côté et un second côté perpendiculaires à une direction d'empilement de la couche diélectrique et de l'électrode interne,
l'électrode externe est disposée sur le premier côté,
le corps de condensateur comporte en outre une partie de marge (114, 115) disposée sur le second côté, et
le film mince est disposé sur la partie de marge.

5. Condensateur multicouche selon la revendication 1, dans lequel z₂ est supérieur à z₁, où z₁ est un % en mole d'oxygène par rapport au titanate de zirconium et baryum total dans le film mince et z₂ est un % en mole d'oxygène par rapport au titanate de zirconium et baryum total dans la couche d'oxyde.

6. Condensateur multicouche selon la revendication 5, dans lequel y₁:y₂ = 100:70 à 100:97, où y₁ est un % en mole de zirconium par apport au titanate de zirconium et baryum total dans le film mince et y₂ est un % en mole de zirconium par rapport au titanate de zirconium et baryum total dans la couche d'oxyde.

7. Condensateur multicouche selon la revendication 5, dans lequel z₁:z₂ = 100:103 à 100:140.

8. Condensateur multicouche selon la revendication 5, dans lequel une épaisseur moyenne de la couche d'oxyde est inférieure ou égale à 5 µm.

9. Condensateur multicouche (100), comprenant :
un corps de condensateur (110) comportant une couche diélectrique (111) et une électrode interne (121, 122) ;
une électrode externe (131, 132) disposée sur le corps de condensateur ; et
un film mince (151a, 151b, 151c 151d) disposé sur le corps de condensateur et comportant du titanate de zirconium et baryum ;
**caractérisé en ce que**
le condensateur multicouche comprend en outre une couche d'oxyde (152a, 152b, 152c, 152d) disposée entre le corps de condensateur et le film mince et comportant du titanate de zirconium et baryum, et
z₂ est supérieur à z₁, où z₁ est un % en mole d'oxygène par rapport au titanate de zirconium et baryum total dans le film mince et z₂ est un % en mole d'oxygène par rapport au titanate de zirconium et baryum total dans la couche d'oxyde.

10. Condensateur multicouche selon la revendication 9, dans lequel y₁:y₂ = 100:70 à 100:97, où y₁ est un % en mole de zirconium par apport au titanate de zirconium et baryum total dans le film mince et y₂ est un % en mole de zirconium par rapport au titanate de zirconium et baryum total dans la couche d'oxyde.

11. Condensateur multicouche selon la revendication 9, dans lequel z₁:z₂ = 100:103 à 100:140 ; et/ou
dans lequel
le titanate de zirconium et baryum du film mince comporte du zirconium selon une quantité de 20 parties par mole à 40 parties par mole sur la base de 100 parties par mole de titane ; et/ou
dans lequel
une épaisseur moyenne du film mince est de 0,1 µm à 3 µm ; et/ou dans lequel
une épaisseur moyenne de la couche d'oxyde est inférieure ou égale à 5 µm.

12. Condensateur multicouche de l'une des revendications 1 à 11, dans lequel le corps de condensateur comporte une partie de couvercle (112, 113) disposée sur la couche diélectrique et l'électrode interne dans une direction d'empilement, et
la couche d'oxyde est disposée sur la partie de couvercle ; ou
dans lequel
le corps de condensateur a un premier côté et un second côté perpendiculaires à une direction d'empilement de la couche diélectrique et de l'électrode interne,
l'électrode externe est disposée sur le premier côté,
le corps de condensateur comporte en outre une partie de marge (114, 115) disposée sur le second côté, et
la couche d'oxyde est disposée sur la partie de marge.

13. Procédé de fabrication d'un condensateur multicouche (100), comprenant la préparation d'une feuille verte diélectrique et la formation d'une couche de pâte conductrice sur une surface de la feuille verte diélectrique ;
l'empilement de la feuille verte diélectrique avec la couche de pâte conductrice pour former une pile de feuilles vertes diélectriques ;
le revêtement d'une composition pour former un film mince (151a, 151b, 151c, 151d) sur la pile de feuilles vertes diélectriques ;
la combustion de la pile de feuilles vertes diélectriques pour former un corps de condensateur (110) ; et
la formation d'une électrode externe (131, 132) sur le corps de condensateur,
dans lequel la composition pour former le film mince comporte de l'oxyde de zirconium, **caractérisé en ce que**
le film mince comporte du titanate de zirconium et baryum, comportant du zirconium selon une quantité de 10 parties par mole à 50 parties par mole sur la base de 100 parties par mole de titane, et
le condensateur multicouche comprend en outre une couche d'oxyde (152a, 152b, 152c, 152d) disposée entre le corps de condensateur et le film mince et comportant du titanate de zirconium et baryum.
